Europäisches Patentamt

European Patent Office

Office européen des brevets

(19)

(11) **EP 1 411 501 A1**

(12) **EUROPEAN PATENT APPLICATION**
published in accordance with Art. 158(3) EPC

(43) Date of publication:
**21.04.2004 Bulletin 2004/17**

(51) Int Cl.⁷: **G11B 5/09**, G11B 5/02,
G11B 20/10, G11B 20/14

(21) Application number: **02751645.9**

(22) Date of filing: **18.07.2002**

(86) International application number:
**PCT/JP2002/007315**

(87) International publication number:
**WO 2003/010757 (06.02.2003 Gazette 2003/06)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **23.07.2001 JP 2001221770**

(71) Applicant: **Sony Corporation
Tokyo 141-0001 (JP)**

(72) Inventors:
• **KOTANI, Yasutaka
Shinagawa-ku, Tokyo 141-0001 (JP)**
• **YANAGI, Yuji
Shinagawa-ku, Tokyo 141-0001 (JP)**

(74) Representative: **Pilch, Adam John Michael
D. YOUNG & CO.,
21 New Fetter Lane
London EC4A 1DA (GB)**

(54) **MAGNETIC REPRODUCTION APPARATUS AND MAGNETIC REPRODUCTION METHOD**

(57)    There are provided a magnetic reproducing apparatus and a magnetic reproducing method, which are suitable for use in reproducing a magnetic tape by using, for example, a magnetoresistive element.

A signal input from a data input 1 undergoes processing suitable for magnetic recording in a recording signal processing circuit 2, and is supplied to a predetermined precoder 3. The signal from the precoder 3 is recorded by a recording head 5 on a recording medium 6 such as a magnetic tape through a recording amplifier 4. The signal read from the recording medium 6 by the reproducing head 7 is supplied to a reproduction equalizer amplifier 8 to be amplified and equalized. The equalized signal is supplied to a circuit 10 having a channel characteristic of, for example, a Partial Response Class 4 (PR4) through an A/D converter 9. The output signal from the circuit 10 is supplied to a PR4 decoder circuit 11 to detect the signal. Further, the signal from the decoder circuit 11 is sent to a reproduction signal processing circuit 12. Then, the signal is output to a data output 13 after executing demodulation, restoration to the original form from the packetized state of the signal, error correction and the like.

Accordingly, the magnetoresistive element conventionally used for reproducing a hard disk and the like may be applied to reproduction of a magnetic tape.

FIG. 1

## Description

TECHNICAL FIELD

The present invention relates to a magnetic reproducing apparatus and a magnetic reproducing method, in which a magnetoresistive element which has been conventionally used for reproducing a hard disk and the like, may be applied, for example, to reproducing a magnetic tape, and more particularly, relates to a magnetic reproducing apparatus and a magnetic reproducing method suitable for use in reproduction of a magnetic tape employing the magnetoresistive element.

BACKGROUND ART

FIG. 11 shows a block diagram of a data magnetic recording and reproducing apparatus as one example of a magnetic reproducing apparatus. In FIG. 11, video data, audio data, additional data, data in files of a computer and the like are input to a data input 80. A signal input from the data input 80 is processed by a recording signal processing circuit 81 into a signal suitable for magnetic recording, that is, undergoes processing of error correction and packetization, and after modulation the signal is recorded by a recording head 83 on a recording medium 84 such as a magnetic tape through a recording amplifier 82.

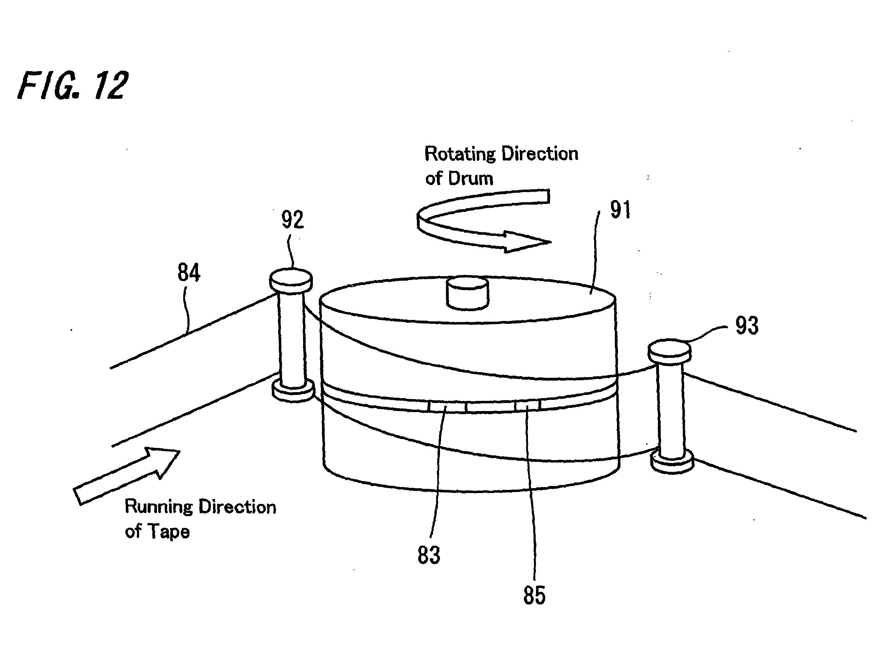

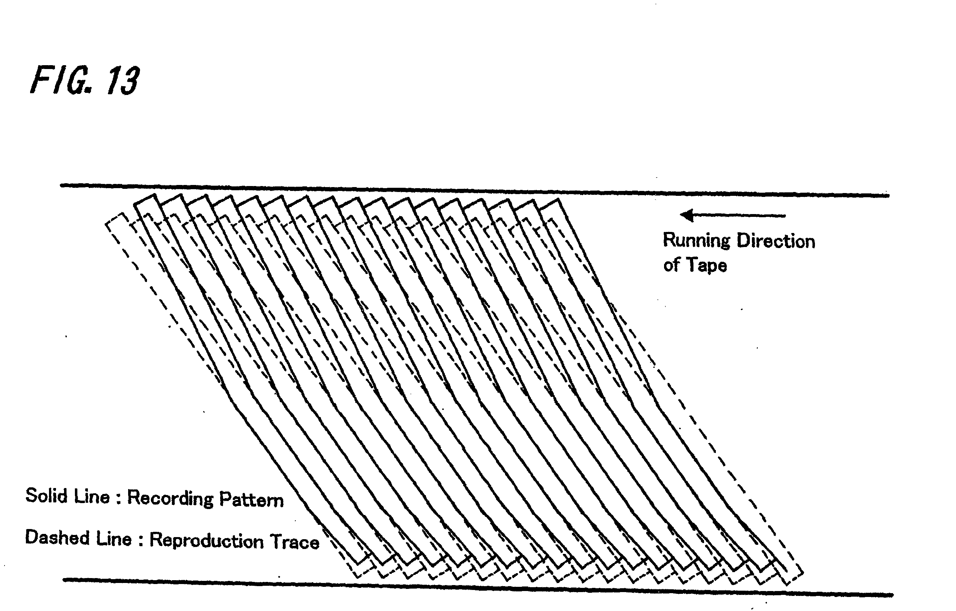

Here, with respect to recording on the above-described recording medium 84, in order to increase relative speed and recording density, the recording is performed according to what is called helical scanning method. That is, the recording according to the helical scanning method is performed, for example, such that a rotating drum 91 and tape guides 92 and 93 at the front and rear of the drum 91 are arranged as shown in FIG. 12 and the magnetic tape recording medium 84 is diagonally transported thereon. Then, the recording head 83 provided on the rotating drum 91 performs recording such that diagonal recording tracks Tr are sequentially formed in a parallel manner as shown in FIG. 13, for example.

Further, the recording tracks Tr formed as described above are read by a reproducing head 85 provided on the same rotating drum 91. That is, since the recording medium 84 is also diagonally transported when the signal is reproduced, signals recorded on the above recording tracks Tr are read by the reproducing head 85. Then, as shown in FIG. 11, the read signal is supplied to an A/D converter 87 through a reproduction equalizer amplifier 86 and further sent to a reproduction signal processing circuit 89 through a signal detection circuit 88. Subsequently, the signal is output to a data output 90 after demodulation, restoration to the original form from the packetized state, error correction and the like are executed.

In the above magnetic recording, in order to further improve the recording density, the track pitch and the minimum width of a recording bit at the magnetic recording have been intended to reduce. However, in the recording according to the above-described helical scanning method, there is a limit in the linearity of the recording track pattern when the track pitch is made narrower. Accordingly, for example, when the recorded patterns which have been formed by the recording head 83 as shown by solid lines in FIG. 13 are reproduced by the reproducing head 85 at another opportunity, reproduction traces become as shown by dashed lines to make correct reproduction impossible.

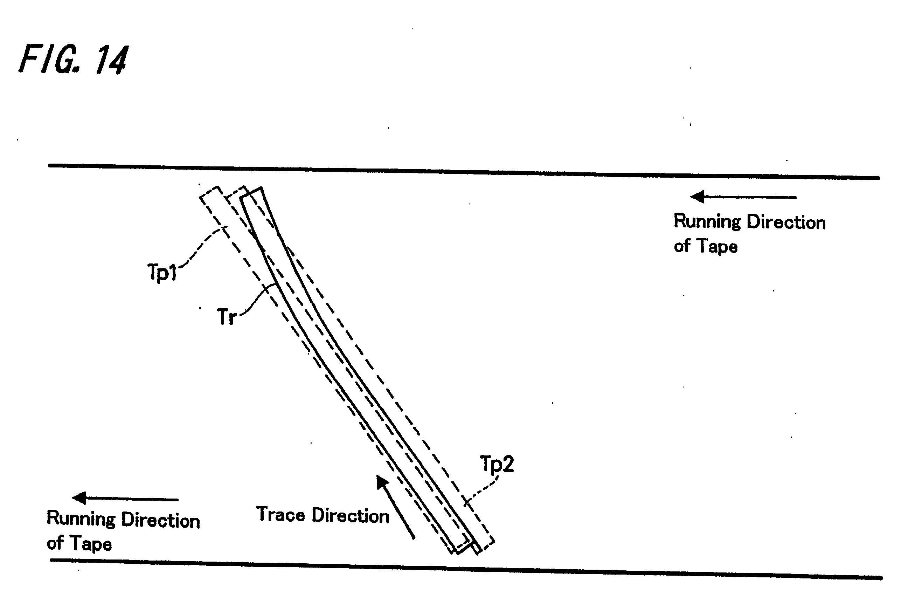

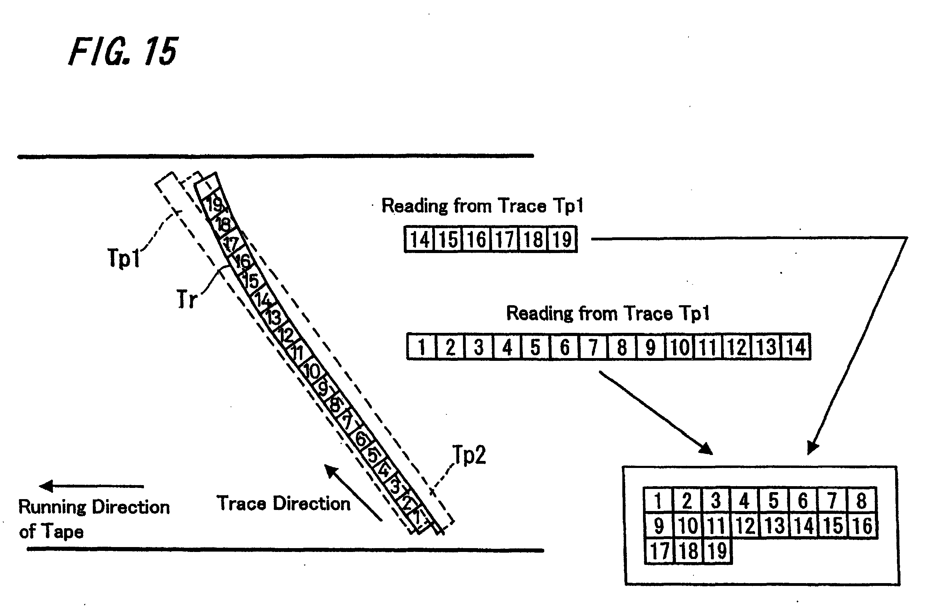

Therefore, in the data magnetic recording and reproducing apparatus, reproducing has been performed according to a non-tracking method as shown in FIG. 14. Specifically, the reproduction according to the non-tracking method is performed, for example, by scanning one recording track Tr two times. In this manner, for example, as shown in FIG. 15 pieces of packetized data 1 to 14 are reproduced by a reproduction trace Tp1 of the first scanning, and pieces of packetized data 15 to 19 are reproduced by a reproduction trace Tp2 of the second scanning. Then, these pieces of data are synthesized in memory to reproduce the whole of the recording track Tr.

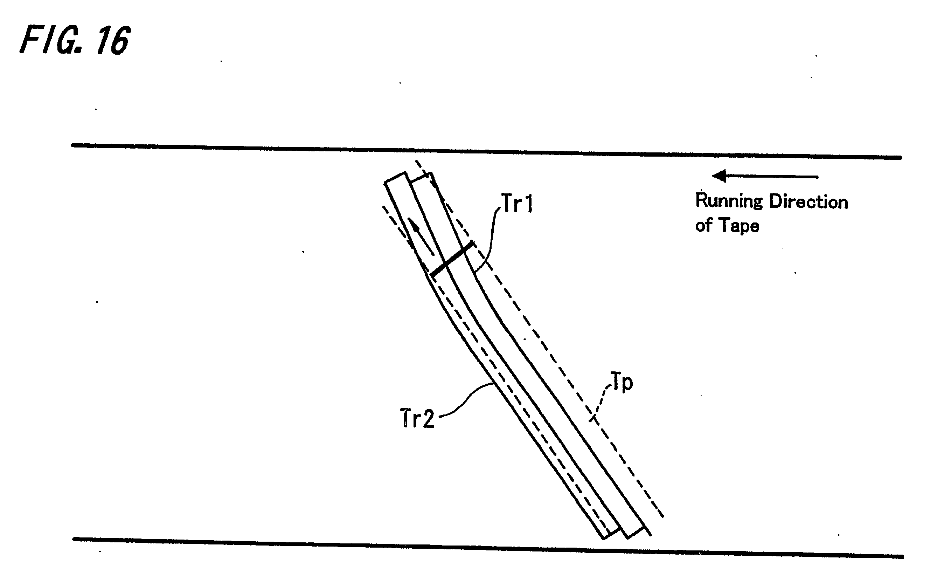

Accordingly, by using the above-described non-tracking method, even in the case of recording tracks in which, for example, the track pitch has been made narrower in the linearity beyond the limit, data reproduction may be performed. However, as shown in FIG. 16, in the reproduction according to the above non-tracking method, the amount of a reproduction trace which laps over adjacent recording tracks becomes larger than that of reproduction according to conventional tracking methods. Specifically, for example, when a recording track Tr1 shown by a solid line is reproduced, a reproduction trace Tp shown by dashed lines largely laps over an adjacent recording track Tr2.

In the above-described non-tracking method, especially when the reproducing head 85 and the recording head 83 are separately provided, in order to obtain reproduction signals reliably the width of the reproducing head 85 is made larger, thereby the amount of a reproduction trace Tp lapped over adjacent tracks further increasing. Moreover, when the track pitch is made narrower beyond the limit of linearity as described above, since the recording track Tr is not corresponding to the reproduction trace Tp, a state in which the reproduction trace Tp laps over the adjacent recording track Tr2 unavoidably occurs.

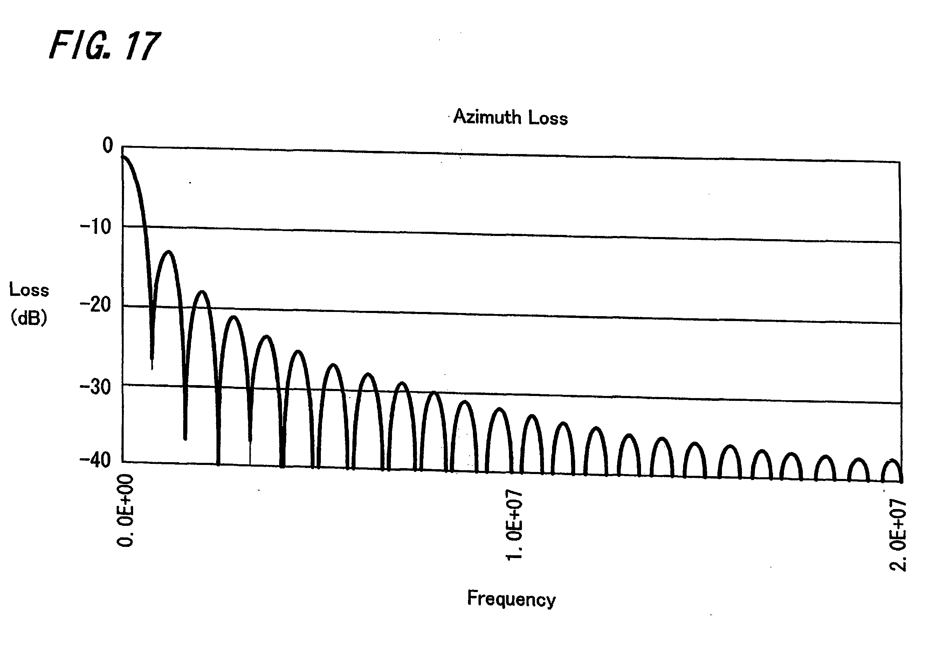

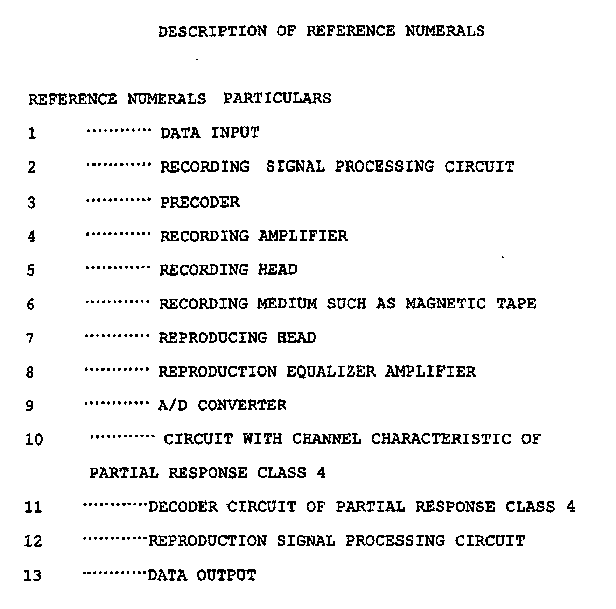

On the other hand, in the magnetic recording and reproducing apparatus of a helical scanning type, by inclining the gap of the recording and reproducing heads within a range of about 5 to 30 degrees, the amount of a crosstalk signal read from the adjacent track has been reduced. However, as shown in frequency characteristics of FIG. 17, the amount of reduction, that is, azimuth loss can not be anticipated especially in the low-frequency area. Accordingly, though a method in which low-frequency components are suppressed by modulating recording signals or other methods has been conventionally adopted, the data amount tends to increase such that ten bits are assigned to an eight-bit code.

The present application has been made in light of the above-described circumstances, and problems to be solved are described as follows. Although reproduction according to the non-tracking method is efficient when the width of a recording track is intended to be made narrower in order to improve the recording density, in conventional apparatuses the amount of reduction in crosstalk signals caused by the fact that the reproduction trace laps over the adjacent recording tracks virtually can not be anticipated especially in the low-frequency area, and therefore there is a possibility that the quality of the reproduction signal is extremely damaged and that the data amount tends to increase and thus reduce the recording capacity when modulation by which low-frequency components are suppressed is used.

DISCLOSURE OF INVENTION

Claim 1 of the present invention is a magnetic reproducing apparatus in which reproduction is performed according to a non-tracking method, wherein a detecting method in which low-frequency components of a reproduction signal are not used is employed as reproduction means.

Accordingly, effects of a crosstalk signal caused by the fact that a reproduction trace laps over adjacent recording tracks may be eliminated, whereby reproduction according to the non-tracking method can be adopted to enable the width of a recording track to be made narrower, and to improve the recording density of a magnetic tape.

Further, according to claim 2 of the present invention, since a Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 3 of the present invention, since an E-Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 4 of the present invention, since an EE-Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 5 of the present invention, a problem of what is called Thermal Asperity Noise (TA noise) which occurs when a reproduction signal is reproduced using a magnetoresistive element may be solved.

Further, according to claim 6 of the present invention, since a reproduction signal is reproduced using a magnetoresistive element and electric current is supplied to the magnetoresistive element with a low-frequency signal, effects of alternating-current components of a power signal which sends to an upper drum a power source supplied to a reproducing head for electric current for detection may be favorably eliminated.

Furthermore, the claim 7 of the present invention is a magnetic reproducing method in which reproduction is performed according to a non-tracking method, wherein a detecting method in which low-frequency components of a reproduction signal are not used is employed as reproduction means.

Accordingly, effects of a crosstalk signal caused by the fact that a reproduction trace laps over adjacent recording tracks may be eliminated, whereby reproduction according to the non-tracking method can be adopted to enable the width of a recording track to be made narrower, and to improve the recording density of a magnetic tape.

Further, according to claim 8 of the present invention, since a Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 9 of the present invention, since an E-Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 10 of the present invention, since an EE-Partial Response Class 4 is employed as a detecting method, a detecting method in which low-frequency components of a reproduction signal are not used is obtained to eliminate effects of a crosstalk signal caused by the fact that a reproduction trace laps over adjacent recording tracks.

Further, according to claim 11 of the present invention, a problem of what is called Thermal Asperity Noise (TA noise) which occurs when a reproduction signal is reproduced using a magnetoresistive element may be solved.

Further, according to claim 12 of the present invention, since a reproduction signal is reproduced using a magnetoresistive element and electric current is supplied to the magnetoresistive element with a low-frequency signal, effects of alternating-current components of a power signal which sends to an upper drum a power source supplied to a reproducing head for electric current for detection may be favorably eliminated.

BRIEF DESCRIPTION OF DRAWINGS

FIG. 1 is a block diagram showing an embodiment of a magnetic reproducing apparatus to which the present invention is applied;
FIG. 2 is a diagram showing an embodiment of a principal part of the magnetic reproducing apparatus in FIG. 1;
FIG. 3 is a characteristic curve to explain the embodiment in FIG. 2;
FIG. 4 is a diagram to explain a magnetic head using a magnetoresistive element;
FIG. 5 is a diagram to explain a Thermal Asperity Noise;
FIG. 6 is a block diagram showing a circuit configuration when signal transmission is performed using a rotary transformer;
FIG. 7 is a block diagram showing another embodiment of the magnetic reproducing apparatus to which the present invention is applied;
FIG. 8 is a diagram showing an embodiment of a principal part of the magnetic reproducing apparatus in FIG. 7;
FIG. 9 is a block diagram showing further another embodiment of the magnetic reproducing apparatus to which the present invention is applied;
FIG. 10 is a diagram showing an embodiment of a principal part of the magnetic reproducing apparatus in FIG. 9;
FIG. 11 is a block diagram to explain a conventional magnetic reproducing apparatus;
FIG. 12 is a constitutional diagram to explain a rotating drum;
FIG. 13 is a diagram to explain recording according to a helical scanning method;
FIG. 14 is a diagram to explain reproduction according to a non-tracking method;
FIG. 15 is a diagram to explain reproduction according to a non-tracking method;
FIG. 16 is a diagram to explain a state in which a reproduction trace laps over adjacent recording tracks; and
FIG. 17 is a characteristic curve to explain azimuth loss.

BEST MODE FOR CARRYING OUT INVENTION

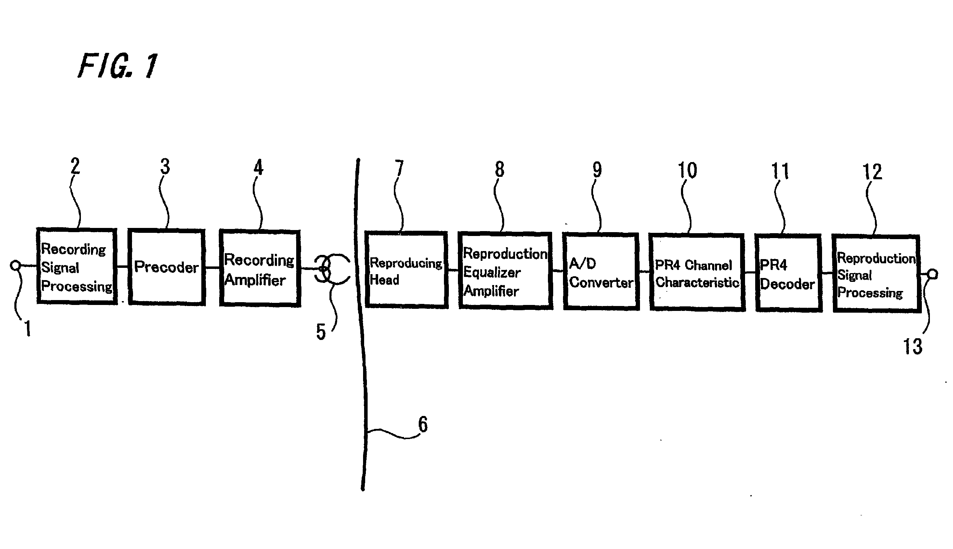

In the present invention, a detecting method in which low-frequency components of a reproduction signal are not used is employed as reproduction means for reproduction according to a non-tracking method, and thus effects of a crosstalk signal caused by the fact that a reproduction trace laps over adjacent recording tracks may be eliminated, whereby a reproduction according to the non-tracking method can be adopted to enable the width of a recording track to be made narrower, and to improve the recording density of a magnetic tape.
Referring to drawings, hereinafter the present invention will be explained, and FIG. 1 is a block diagram showing an embodiment of a data magnetic recording and reproducing apparatus to which a magnetic reproducing apparatus according to the present invention is applied.
In FIG. 1, video data, audio data, additional data, data in files of a computer and the like are input to a data input 1. A signal input from the data input 1 is processed by a recording signal processing circuit 2 into the signal suitable for magnetic recording, namely, undergoes processing of error correction and packetization, and is supplied to a predetermined precoder 3. Then, in the precoder 3 precoding, for example, shown in the following numerical expression (1) is executed.

$$\frac{1}{(1 \oplus D^2)} \qquad (1)$$

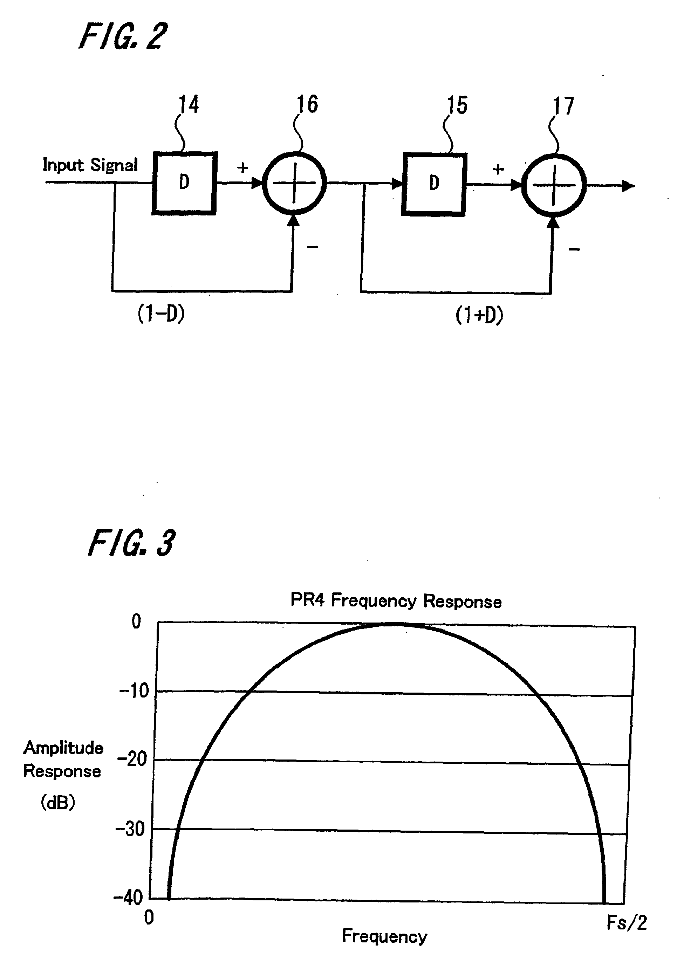

where, $\oplus$ indicates mod2 operation.
Subsequently, the signal from the precoder 3 is recorded by a recording head 5 on a recording medium 6 such as a magnetic tape through a recording amplifier 4. Here, recording on the recording medium 6 is executed according to a helical scanning method using the above-described rotating drum (refer to FIG. 12). Further, the recording medium 6 on which recording has been executed as described above is read by a reproducing head 7 provided on the same rotating drum. In other words, reproduction according to the helical scanning method is also executed when the signal is reproduced, and the signal recorded on the recording medium 6 is read by the reproducing head 7.
The signal read by the reproducing head 7 is supplied to a reproduction equalizer amplifier 8 for amplification and equalization. Here, a signal reproduced by a magnetic head has a wave form as if the signal were subjected to time differentiation. Therefore, by executing integration and equalization in the reproduction equalizer amplifier 8 a wave form approximately equal to that of a recorded electric-current wave form is obtained. The equalized signal is supplied to an A/D converter 9, and the signal digitized in the converter is supplied to a circuit 10 having a channel characteristic of a Partial Response Class 4 (hereinafter called PR4), for example.
Specifically, the circuit 10 having the PR4 channel characteristic is configured as shown in FIG. 2. In FIG. 2, delay elements (D) 14 and 15 are provided in one sample period, and an input signal is supplied to the delay element (D) 14 to subtract the original input signal from the output signal of the element 14 in an arithmetic circuit 16. Further, the subtracted signal is supplied to the delay element (D) 15, and the original subtracted signal is added to the output signal of the element 15 in an arithmetic circuit 17. Thus, equalization is executed such that the operation expressed as follows is carried out.

$$(1-D) * (1+D) = (1-D^2) \qquad (2)$$

Accordingly, when the above equalization is executed, as shown in FIG. 3, there are obtained frequency characteristics in which low and high frequencies are cut off. That is, as described above, the amount of reduction in crosstalk signals read from adjacent tracks, which is caused by the azimuth loss can not be anticipated especially in the low frequency area as shown in FIG. 17. However, since the circuit 10 has the PR4 channel characteristics in which low frequencies are cut off, effects of crosstalk signals from the above-described adjacent tracks may be favorably eliminated.

Then, an output signal from the circuit 10 having the PR4 channel characteristics is supplied to a PR4 decoder circuit 11 to detect the signal according to the PR4. Further, a signal from the decoder circuit 11 is sent to a reproduction signal processing circuit 12. Subsequently, the signal is output to a data output 13 after demodulation, restoration to the original form from the packetized state, error correction and the like are executed. Consequently, in this apparatus, since the detecting method (PR4) in which low-frequency components of the reproduction signal are not used is employed as reproduction means, there may be performed reproduction in which the effects of crosstalk signals from adjacent tracks are eliminated.

Accordingly, in this embodiment, the detecting method without using low-frequency components of a reproduction signal is employed as reproduction means for reproduction according to the non-tracking method, whereby effects of crosstalk signals caused by the fact that a reproduction trace laps over adjacent recording tracks may be eliminated and reproduction according to the non-tracking method can be adopted to enable the width of a recording track to be made narrower, and to improve the recording density of a magnetic tape.

Consequently, though reproduction according to the non-tracking method is useful when the width of a recording track is made narrower to improve the recording density, there have been problems in conventional apparatuses that the amount of reduction in crosstalk signals caused by the fact that a reproduction trace laps over the adjacent recording tracks virtually can not be anticipated especially in a low frequency area, thereby causing a possibility that the quality of the reproduction signal is extremely damaged, and that the data amount becomes larger and the recording capacity is reduced when modulation by which low-frequency components are suppressed is used. However, according to the present invention, the above problems may be easily solved.

Then, in the case where the width of a recording track is made narrower as described above to improve the recording density of the magnetic tape, in a conventional induction-type magnetic head since the output of the head is not sufficient and the S/N ratio of a reproduction signal becomes small, data of sufficient quality may not be reproduced. Accordingly, it has been considered that the problems on the S/N ratio and the like are solved by using a magneto-resistive head (hereinafter called MR head) which has an output several times larger than that of the conventional induction-type magnetic head.

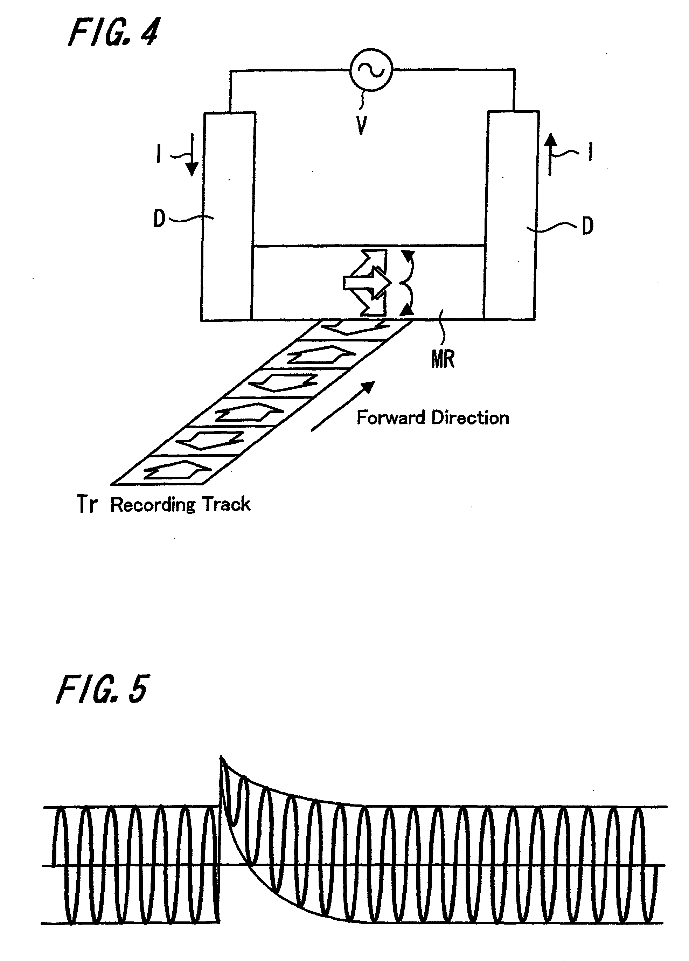

Specifically, the above-described MR head has a configuration shown in FIG. 4, for example. As shown in FIG. 4, a magnetoresistive element MR is provided in such a manner that the magnetoresistive element MR crosses a recording track Tr. Thus, the direction of magnetization of the magnetoresistive element MR is changed in response to change in the external magnetic field caused by the recording track Tr, and the electric resistance value of the element MR is changed. Then, predetermined electric current I is allowed to flow into the magnetoresistive element MR from electrodes D at both ends, and changes in the resistance value of the element MR are detected by a voltage drop, thereby obtaining an output voltage V corresponding to a signal recorded on the recording track Tr.

Accordingly, when the above MR head is used, since reproduction of extremely high output may be obtained compared with reproduction by a conventional induction-type magnetic head, data of sufficient quality may be reproduced by making the S/N ratio of the reproduction signal larger even in the case of the recording track Tr, for example, the width of which is made narrower. Further, compared with an induction-type magnetic head, a signal may be reproduced by the head of simple construction, whereby a small-size magnetic head is provided to enable the whole size of the apparatus to be smaller. In addition, using a magnetic head of a simple structure may reduce a possibility of breakdown or the like and may improve the stability, reliability, and the like of the apparatus.

Here, it has been known that a problem of what is called Thermal Asperity Noise (hereinafter called TA noise) occurs, when data recorded on, for example, a magnetic tape are reproduced using the above MR head having such a magnetoresistive element. That is, the MR head detects the change in resistance value of the magnetoresistive element, which is caused by rotation of magnetization angles in the element caused by the external magnetic field. In this case, the external magnetic field indicates a magnetic field caused by a magnetization pattern recorded on such a medium as a tape and a disk.

However, when such MR head collides with a projecting material such as dust generated on media, there occurs a phenomenon in which the temperature of the MR head is rapidly (in one μsec. or less) changed by frictional heat generated by the collision and then the temperature slowly (in several μsec.) returns to the original state due to the thermal diffusion. Thus, the resistance value of the magneto resistive element is also changed by such heat, and in this case the thermal fluctuation in the resistance value is larger than that caused by the above external magnetic field. Accordingly, when the above thermal fluctuation in the resistance value is generated by such heat, there occurs the fluctuation in the output signal voltage of the MR head in which the above change in the resistance value is obtained as change in voltage.

Specifically, as shown in FIG. 5, for example, there occurs such a phenomenon in which a reproduction signal originally held at a constant amplitude by an AGC amplifier or the like suddenly changes immediately after the collision and slowly returns to the original state. Such phenomenon is called Thermal Asperity (TA), and noise caused by TA is referred to TA noise. However, with respect to the above TA noise, experiments have confirmed that length of the influence of the TA noise is made shorter by, for example, cutting off low-frequency components of an input signal (refer to the Japan patent application 2001-115590).

Then, in the above-described apparatus, the detecting method without using low-frequency components of a reproduction signal is employed, whereby the influence of such TA noise is also favorably eliminated. That is, in the above apparatus, low-frequency components of the input signal are cut off in the circuit 10 having the PR4 channel characteristic, whereby the influence of fluctuations caused by the above TA noise may be removed and favorable reproduction signals may be obtained.

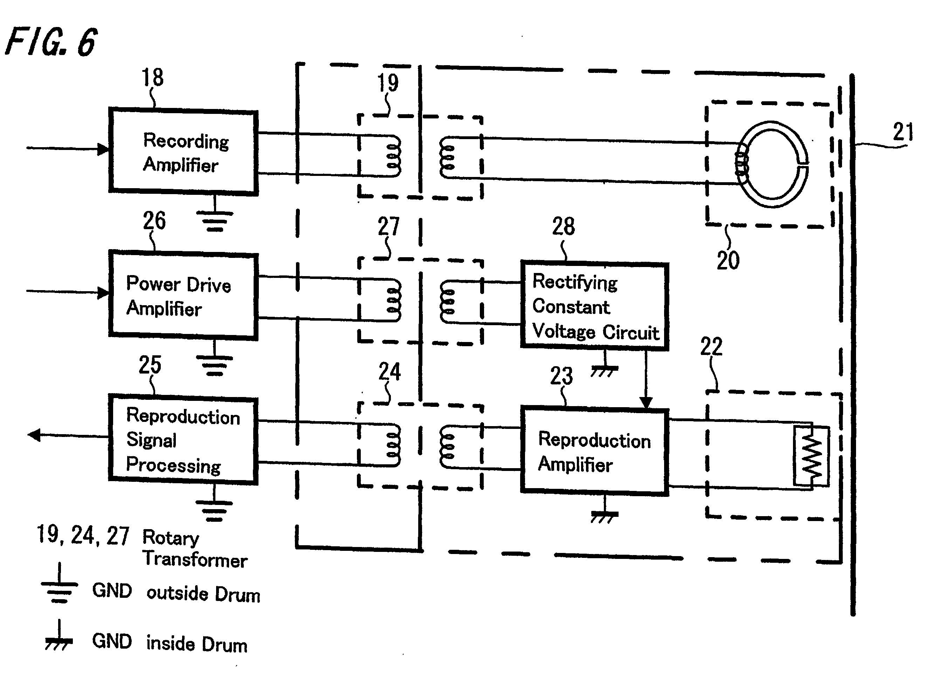

On the other hand, when recording is executed according to the above-mentioned helical scanning method, recording and reproducing are executed by mounting the recording head and the reproducing head on the rotating drum. In this case, since the rotating drum is rotated at high speed, it is impossible to be electrically connected by wire. Accordingly, signal transmission is conventionally performed using a transformer called a rotary transformer. Then, an electric configuration is shown in FIG. 6 when signal transmission is performed using the above rotary transformers.

In FIG. 6, a part enclosed by a chain double-dashed line shows the inside of the rotating drum, and the right side separated by a chain line within the part shows, for example, circuits of a rotating upper drum. Then, a signal is applied, for example, from a recording amplifier 18 to a recording head 20 through a rotary transformer 19 provided for recording signals, and is converted into a magnetic signal to be recorded on a magnetic tape 21. On the other hand, the signal recorded on the magnetic tape 21 is picked up by a reproducing head 22 to be amplified by a reproduction amplifier 23. Subsequently, the reproduction signal is sent to a reproduction signal processing circuit 25 through a rotary transformer 24 provided for reproduction signals, and the signal is restored to the original state.

Further, when the MR head is used as the reproducing head 22 in the above configuration, since the electric current for detection is required to be supplied to the head, a power source is then required to be sent to the upper drum. Accordingly, an alternating-current power signal is generated by a power drive amplifier 26, and the power signal is supplied to a rectifying constant voltage circuit 28 through a power rotary transformer 27, and after obtaining direct current in the rectifying constant voltage circuit 28, the signal is supplied to the reproduction amplifier 23.

However, in this case, there is a possibility that alternating-current components of the power signal generated in the above power drive amplifier 26 are mixed into the reproduction signal to deteriorate the reproduction signal. Then, in the above-described apparatus, by utilizing the condition under which the low-frequency components of the input signal are cut off in the circuit 10 having the PR4 channel characteristic, frequencies lower than the cut off low-frequency component in the circuit 10 having the PR4 channel characteristic are, for example, used as frequencies for alternating-current components of the power signal generated in the power drive amplifier 26.

According to the above configuration, the power signal generated by the power drive amplifier 26 is supplied to the rectifying constant voltage circuit 28 through the power rotary transformer 27, and after obtaining direct current in the rectifying constant voltage circuit 28, the signal supplied to the reproduction amplifier 23, and therefore even when the alternating-current components of the power signal are mixed into the reproduction signal, the alternating-current components are cut off in the circuit 10 having the PR4 channel characteristic, thereby the influence of fluctuation caused by the alternating-current components of the power signal being removed. Accordingly, a favorable reproduction signal may be obtained.

Thus, according to the magnetic reproducing apparatus of the present invention, the apparatus in which reproduction is performed according to the non-tracking method is provided, and effects of a crosstalk signal caused by the fact that a reproduction trace laps over adjacent recording tracks may be eliminated by using the detecting method without using low-frequency components of a reproduction signal as reproduction means, whereby reproduction according to the non-tracking method can be adopted to enable the width of a recording track to be made narrower, and to improve the recording density of a magnetic tape.

Furthermore, although in the above description the circuit 10 having the PR4 channel characteristic has been employed as the detecting method without using the low-frequency components of the reproduction signal, other detecting methods may be applied to the present invention.

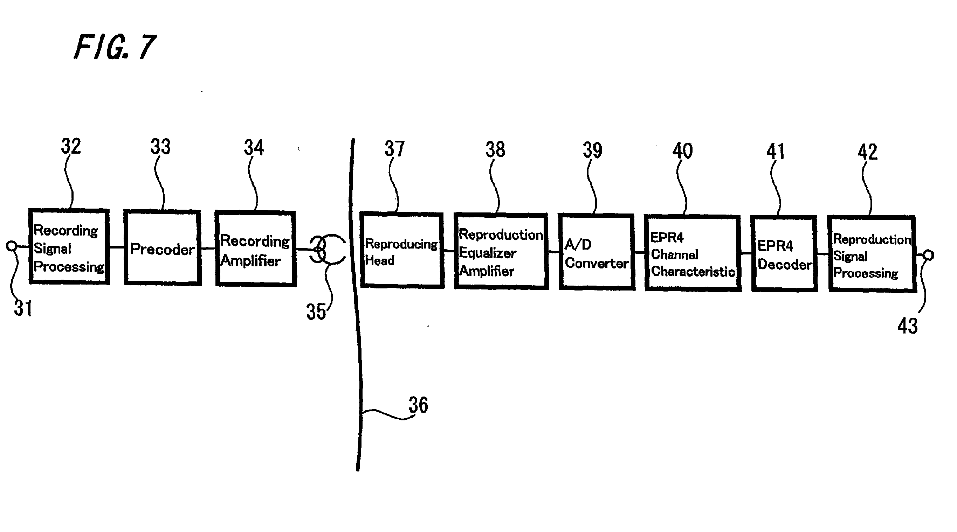

Thus, in FIG. 7 there is shown another embodiment in which a circuit having an E-Partial Response Class 4 (hereinafter called EPR 4) channel characteristic is employed as the detecting method without using the low-frequency components of the reproduction signal. In FIG. 7, video data, audio data, additional data, data in files of a computer and the like are input to a data input 31. A signal input from the data input 31 is processed by a recording signal processing circuit 32 into a signal suitable for magnetic recording, that is, undergoes processing of error correction and packetization, and is supplied to a predetermined precoder 33.

In the precoder 33, similar precoding to that of the above numerical expression (1) is executed. Then, the signal from the precoder 33 is recorded by a recording head 35 on a recording medium 36 such as a magnetic tape through a recording amplifier 34. Here, recording on the recording medium 36 is executed according to the helical scanning method. Further, with respect to the recording medium 36 on which recording has been executed as described above, reproduction is also executed according to the helical scanning method when a signal is reproduced, and a signal recorded on the recording medium 36 is read by a reproducing head 37.

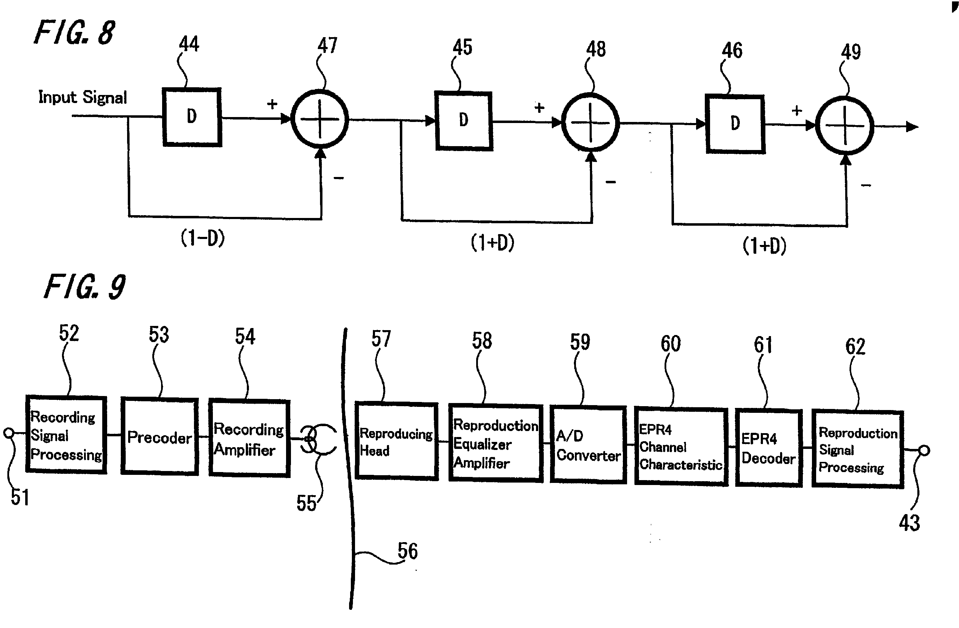

Furthermore, the signal read by the reproducing head 37 is supplied to a reproduction equalizer amplifier 38 to be amplified and equalized by means of integration and equalization, in which an electric current wave form similar to that of the recorded electric current wave form is obtained. The equalized signal is supplied to an A/D converter 39, and the signal digitized in the converter is supplied to a circuit 40 having EPR4 channel characteristic, for example. Specifically, the circuit 40 having the EPR4 channel characteristic is configured as shown in FIG. 8.

In FIG. 8, delay elements (D) 44, 45, and 46 are provided in one sample period and an input signal is supplied to the delay element (D) 44, and then in an arithmetic circuit 47 the original input signal is subtracted from the output signal of the element 44. The subtracted signal is supplied to the delay element (D) 45, and in an arithmetic circuit 48 the original subtracted signal is added to the output signal from the element 45. Further, the added signal is supplied to the delay element (D) 46, and in an arithmetic circuit 49 the original added signal is added to the output signal from the element 46. Accordingly, in the circuit 40 equalization is executed such that the operation expressed as follows is carried out.

$$(1-D^2) * (1+D) \qquad (3)$$

Accordingly, the above equalization is also executed in the circuit having the frequency characteristics, in which low and high frequencies are cut off in a similar manner to that of the circuit in FIG. 2, that is, as described above, though the amount of reduction in crosstalk signals read from adjacent tracks caused by the azimuth loss virtually can not be anticipated especially in the low frequency area, the circuit 40 has the EPR4 channel characteristic in which low frequencies are cut off, whereby effects of the above-described crosstalk signals from adjacent tracks may be favorably eliminated.

Then, the output signal from the circuit 40 having the EPR4 channel characteristics is supplied to an EPR4 decoder circuit 41 to detect the signal. Further, the signal from the decoder circuit 41 is sent to a reproduction signal processing circuit 42, and the signal is output to a data output 43 after demodulation, restoration to the original form from the packetized state of the signal, error correction and the like are executed. Accordingly, also in this embodiment, by using the detecting method according to the E-Partial Response Class 4 there may be executed reproduction in which effects of crosstalk signals from adjacent tracks, the TA noise, the alternating-current components of the power signal, and the like are eliminated.

In FIG. 9, there is shown further another embodiment in which a circuit having an EE-Partial Response Class 4 (hereinafter called EEPR 4) channel characteristic is employed as the detecting method without using the low-frequency components of the reproduction signal. In FIG. 9, video data, audio data, additional data, data in files of a computer and the like are input to a data input 51. A signal input from the data input 51 is processed by a recording signal processing circuit 52 into a signal suitable for magnetic recording, that is, undergoes processing of error correction and packetization, and is supplied to a predetermined precoder 53.

In the precoder 53, similar precoding to that of the above-described numerical expression (1) is executed. Then, the signal from the precoder 53 is recorded by a recording head 55 on a recording medium 56 such as a magnetic tape through a recording amplifier 54. Recording on the recording medium 56 is executed according to the helical scanning method. Further, with respect to the recording medium 56 on which recording has been executed as described above, reproduction is also executed according to the helical scanning method when the signal is reproduced, and a signal recorded on the recording medium 56 is read by a reproducing head 57.

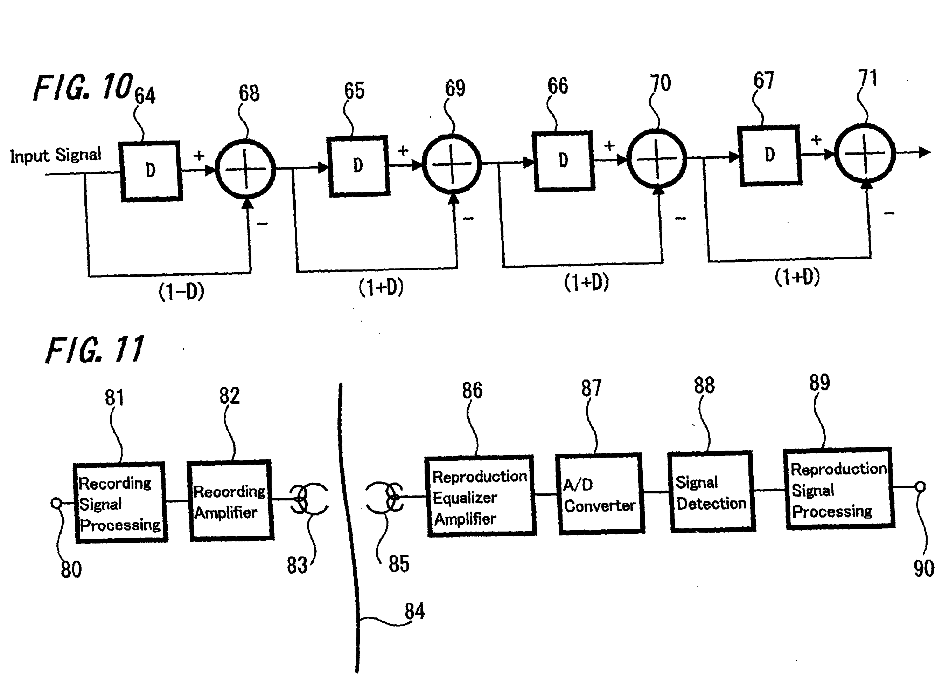

Furthermore, the signal read by the reproducing head 57 is supplied to a reproduction equalizer amplifier 58 to be amplified and equalized by means of integration and equalization, in which an electric current wave form similar to that of the recorded electric current wave form is obtained. The equalized signal is supplied to an A/D converter 59, and the signal digitized in the converter is supplied to a circuit 60 having EEPR4 channel characteristic, for example. Specifically, the circuit 60 having the EEPR4 channel characteristic is configured as shown in FIG. 10.

In FIG. 10, delay elements (D) 64, 65, 66, and 67 are provided in one sample period and an input signal is supplied to the delay element (D) 64, and then in an arithmetic circuit 68 the original input signal is subtracted from the output signal of the element 64. The subtracted signal is supplied to the delay element (D) 65, and in an arithmetic circuit 69 the original subtracted signal is added to the output signal from the element 65. The added signal is supplied to the delay element (D) 66, and in an arithmetic circuit 70 the original added signal is added to the output signal from the element 66. Further, the added signal is supplied to the delay element (D) 67, and in an arithmetic circuit 71 the original added signal is added to the output signal from the element 67. Accordingly, in the circuit 60 equalization is executed in such a manner that the operation expressed as follows is carried out.

$$(1-D^2) * (1+D)^2 \qquad (4)$$

Accordingly, the above equalization is also executed in the circuit having the frequency characteristics, in which low and high frequencies are cut off in a similar manner to that of the circuit in FIG. 2, that is, as described above, though the amount of reduction in crosstalk signals read from adjacent tracks caused by the azimuth loss can not be anticipated especially in the low frequency area, the circuit 60 has the EEPR4 channel characteristic in which low frequencies are cut off, whereby the above-described effects of crosstalk signals from adjacent tracks may be favorably eliminated.

Then, the output signal from the circuit 60 having the EEPR4 channel characteristics is supplied to an EEPR4 decoder circuit 61 to detect the signal. Further, the signal from the decoder circuit 61 is sent to a reproduction signal processing circuit 62, and the signal is output to a data output 63 after demodulation, restoration to the original form from the packetized state of the signal, error correction and the like are executed. Accordingly, further in this embodiment, by using the detecting method according to the EE-Partial Response Class 4 there may be executed reproduction in which effects of crosstalk signals from adjacent tracks, the TA noise, the alternating-current components of the power signal, and the like are eliminated.

Moreover, each of the above-described embodiments may use what is called Viterbi decoder as the decoder circuit 11 according to PR4, the decoder circuit 41 according to EPR4, and the decoder circuit 61 according to EEPR4. Furthermore, in the above decoders it is possible to employ a trellis modulation method at the same time.

The present invention is not limited to the embodiments described above, and can take various modifications without departing from the gist of the present invention.

**Claims**

1. A magnetic reproducing apparatus in which reproduction is performed according to a non-tracking method **characterized in that**:

   a detecting method in which low-frequency components of a reproduction signal are not used is employed as reproduction means.

2. A magnetic reproducing apparatus according to claim 1, wherein
   said detecting method is of a Partial Response Class 4.

3. A magnetic reproducing apparatus according to claim 1, wherein
   said detecting method is of an E-Partial Response Class 4.

4. A magnetic reproducing apparatus according to claim 1, wherein
   said detecting method is of an EE-Partial Response Class 4.

5. A magnetic reproducing apparatus according to claim 1, wherein
   said reproduction signal is reproduced using a magnetoresistive element.

6. A magnetic reproducing apparatus according to claim 1, wherein
   said reproduction signal is reproduced using a magnetoresistive element and
   electric current is supplied to said magnetoresistive element with a low-frequency signal.

7. A magnetic reproducing method in which reproduction is performed according to a non-tracking method **characterized in that**:

   a detecting method in which low-frequency components of a reproduction signal are not used is employed as reproduction means.

8. A magnetic reproducing method according to claim 7, wherein
   said detecting method is of a Partial Response Class 4.

9. A magnetic reproducing method according to claim 7, wherein
   said detecting method is of an E-Partial Response Class 4.

**10.** A magnetic reproducing method according to claim 7, wherein

said detecting method is of an EE-Partial Response Class 4.

**11.** A magnetic reproducing method according to claim 7, wherein

said reproduction signal is reproduced using a magnetoresistive element.

**12.** A magnetic reproducing method according to claim 7, wherein

said reproduction signal is reproduced using a magnetoresistive element and

electric current is supplied to said magnetoresistive element with a low-frequency signal.

EP 1 411 501 A1

## FIG. 1

Recording Signal Processing **2** → Precoder **3** → Recording Amplifier **4** → **5** ‖ **6** Reproducing Head **7** → Reproduction Equalizer Amplifier **8** → A/D Converter **9** → PR4 Channel Characteristic **10** → PR4 Decoder **11** → Reproduction Signal Processing **12**

**1** ... **13**

## FIG. 2

## FIG. 3

PR4 Frequency Response

## FIG. 4

Tr Recording Track

Forward Direction

## FIG. 5

# FIG. 6

**18** Recording Amplifier

**26** Power Drive Amplifier

**25** Reproduction Signal Processing

**19**

**27**

**24**

**28** Rectifying Constant Voltage Circuit

**23** Reproduction Amplifier

**21**

**20**

**22**

19, 24, 27  Rotary Transformer

⏚  GND  outside Drum

⏚  GND  inside Drum

EP 1 411 501 A1

*FIG. 7*

EP 1 411 501 A1

FIG. 8

FIG. 9

**FIG. 10**

**FIG. 11**

FIG. 12

Rotating Direction of Drum

Running Direction of Tape

# FIG. 13

Running Direction
of Tape

Solid Line : Recording Pattern

Dashed Line : Reproduction Trace

# FIG. 14

Running Direction
of Tape

Tp1

Tr

Tp2

Running Direction
of Tape

Trace Direction

EP 1 411 501 A1

# FIG. 15

## FIG. 16

FIG. 17

Azimuth Loss

Loss (dB)

0

−10

−20

−30

−40

0. 0E+00

1. 0E+07

2. 0E+07

Frequency

EP 1 411 501 A1

DESCRIPTION OF REFERENCE NUMERALS

REFERENCE NUMERALS  PARTICULARS

1           ············ DATA INPUT

2           ············ RECORDING  SIGNAL PROCESSING CIRCUIT

3           ············ PRECODER

4           ············ RECORDING AMPLIFIER

5           ············ RECORDING HEAD

6           ············ RECORDING MEDIUM SUCH AS MAGNETIC TAPE

7           ············ REPRODUCING HEAD

8           ············ REPRODUCTION EQUALIZER AMPLIFIER

9           ············ A/D CONVERTER

10          ············ CIRCUIT WITH CHANNEL CHARACTERISTIC OF
            PARTIAL RESPONSE CLASS 4

11          ············DECODER CIRCUIT OF PARTIAL RESPONSE CLASS 4

12          ············REPRODUCTION SIGNAL PROCESSING CIRCUIT

13          ············DATA OUTPUT

## INTERNATIONAL SEARCH REPORT

| International application No. |
| --- |
| PCT/JP02/07315 |

**A. CLASSIFICATION OF SUBJECT MATTER**
Int.Cl$^7$ G11B5/09, G11B5/02, G11B20/10, G11B20/14

According to International Patent Classification (IPC) or to both national classification and IPC

**B. FIELDS SEARCHED**

Minimum documentation searched (classification system followed by classification symbols)
Int.Cl$^7$ G11B5/00-5/24, G11B5/09, G11B20/10-20/16

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2002 |
| Kokai Jitsuyo Shinan Koho | 1971–2002 | Toroku Jitsuyo Shinan Koho | 1994–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 10-112014 A (Sony Corp.), 28 April, 1998 (28.04.98), Par. Nos. [0018] to [0019], [0028] to [0034] (Family: none) | 1–12 |
| Y | US 4885646 A (Sony Corp.), 05 December, 1989 (05.12.89), Full text & JP 2576532 B2 | 1–12 |
| Y | US 2001/0005405 A1 (Fujitsu Ltd.), 28 January, 2001 (28.01.01), Par. Nos. [0012] to [0013] & JP 2000-76805 A | 3,4,9,10 |

[X] Further documents are listed in the continuation of Box C.   [ ] See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 October, 2002 (22.10.02) | 05 November, 2002 (05.11.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

24

International application No.

PCT/JP02/07315

**INTERNATIONAL SEARCH REPORT**

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2000-339609 A (Sony Corp.), 08 December, 2000 (08.12.00), Par. Nos. [0027] to [0028] (Family: none) | 5,11 |
| Y | JP 9-115103 A (Hitachi, Ltd.), 02 May, 1997 (02.05.97), Par. Nos. [0048] to [0049] (Family: none) | 6,12 |

Form PCT/ISA/210 (continuation of second sheet) (July 1998)